# EUROPEAN PATENT APPLICATION

(11) **EP 1 892 604 A2**
(43) Date of publication of application: **27.02.2008**
(21) Application number: 07251770.9
(22) Date of filing: 26.04.2007
(51) Int. Cl.: G06F 1/26

(54) **Power supply and computer using the same**

(30) Priority: 18.08.2006 CN 200610111443
(71) Applicant: ASUSTeK Computer Inc., Peitou, Taipei City (TW)
(72) Inventor: Hsu, Shou-Hsiu, Peitou, Taipei City (TW); Huang, Kuo-Hsun, Peitou, Taipei City (TW); Lai, Yu-Hsuan, Peitou, Taipei City (TW); Huang, Hsing-Wu, Peitou, Taipei City (TW)
(74) Representative: Tranter, Andrew David

(57) **Abstract**

The present invention provides a power supply 3 and computer 5 using the same. The power supply 3 includes a housing 31 having a first surface 311 and second surface 312. An audio input connector 32 is arranged on the first surface 311 for receiving audio signal. An audio output connector 53 is arranged on the second surface 312. An AC to DC power conversion module 36 is arranged in the housing for converting AC power into DC power. An audio power amplification module 37 is arranged in the housing for amplifying the audio signal and outputting the amplified audio signal via the audio output connector 53. A DC to DC power conversion module is arranged in the housing and connected to the AC to DC power conversion module for converting the DC power supplied by the AC to DC power conversion module 36.

## Description

### BACKGROUND OF THE INVENTION

### 1. Field of the Invention

The invention relates to a power supply and, more particularly, to a power supply with audio amplification and a computer using the same.

### 2. Description of Related Art

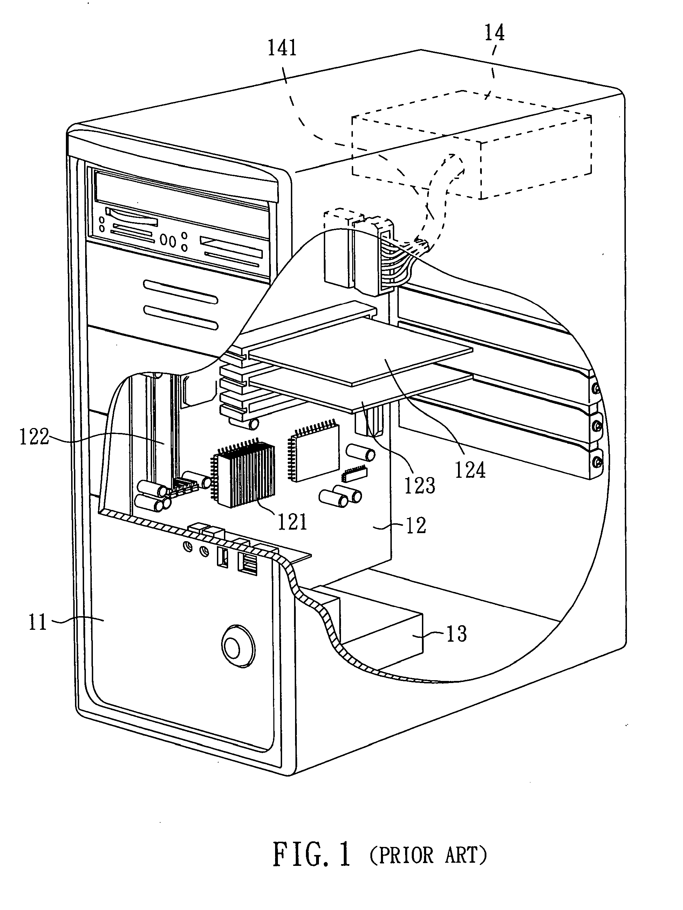

FIG. 1 is a schematic diagram showing an internal structure of a conventional desktop computer. The conventional desktop computer includes a casing 11, a motherboard 12, a disk drive 13 and a power supply 14, wherein the motherboard 12, the disk drive 13, and the power supply 14 are installed in the casing 11. The motherboard 12 is mounted with a Central Processing Unit (CPU) 121, a memory 122, a display card 123, a sound card 124, etc., so as to provide the computer with data processing, math operation, and media player capabilities. In addition, the power supply 14 has a DC power output cord 141 for being plugged into the motherboard 12, so as to convert the utility power into various kinds of DC voltages for supplying power to the electronic elements of the computer.

In general, a sound card 124 in the computer or a sound chip built in the motherboard 12 is used to provide an audio playing capability, which is usually operated in combination with a specific software algorithm (e.g. POWER DVD software) to perform an adjustment on audio signal. The sound card 124 usually has an audio source connector to connect with an earphone or an active loudspeaker (or known as a PC speaker) for playing the audio signal. However, the sound amplification effect of the general earphone or active loudspeaker is not satisfactory for users who pay much attention to high quality sound effect. Accordingly, the audio playing capability of the computer cannot satisfy the actual requirement.

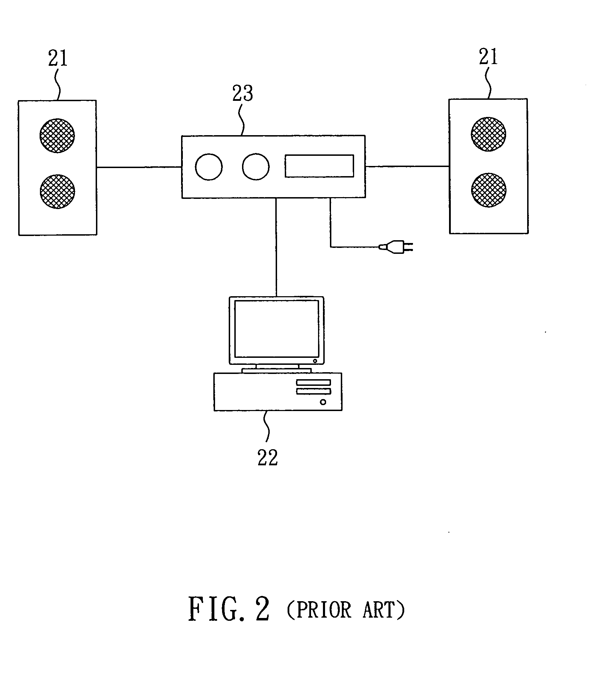

In order to improve the audio playing capability of the computer, as shown in FIG.2, a high level passive loudspeaker 21 is employed to play the audio signal. Since the output of the sound card or the sound chip of the computer 22 is unable to drive the high level passive loudspeaker 21, an amplifier 23 is thus required for connecting to the high level passive loudspeaker 21. This amplifier 23 receives power from an external power source to process and amplify the audio signal of the computer 22, so as to drive the high level passive loudspeaker 21 to play a high quality sound effect. However, such an arrangement needs extra amplifier 23 and wire connection, resulting in increased system complexity and high cost. Further, adjustment to the audio signal is achieved by operating the amplifier 23, which may cause inconvenience in use. Therefore, it is desired for the above computer and audio playing arrangement to be improved.

### SUMMARY OF THE INVENTION

The object of the invention is to provide a power supply and a computer using the same, so as to enable the computer to directly drive a passive loudspeaker for playing high quality sound effect.

In accordance with one aspect of the invention, there is provided a power supply, which includes: a housing having a first surface and a second surface; at least one audio input connector arranged on the first surface of the housing for electrically connecting to a computer; at least one audio output connector arranged on the second surface of the housing; an AC to DC power conversion module arranged in the housing for converting an AC power to provide a DC power; an audio power amplification module arranged in the housing and electrically connected to the audio input connector and the audio output connector, respectively, for processing audio signal provided by the computer; and a DC to DC power conversion module arranged in the housing and electrically connected to the AC to DC power conversion module and the audio power amplification module, respectively, for converting the DC power provided by the AC to DC power conversion module, so as to supply power to the audio power amplification module to operate.

In accordance with another aspect of the invention, there is provided a computer, which includes: a casing; a motherboard arranged in the casing; and a power supply arranged in the casing, the power supply including a housing having a first surface facing to inside of the computer and a second surface facing to outside of the computer. The first surface is arranged with at least one audio input connector for receiving audio signal generated by the motherboard. The second surface is arranged with at least one audio output connector for outputting the audio signal amplified.

Other objects, advantages, and novel features of the invention will become more apparent from the following detailed description when taken in conjunction with the accompanying drawings.

### BRIEF DESCRIPTION OF THE DRAWINGS

FIG. 1 is a schematic diagram showing an internal structure of a conventional desktop computer;
FIG. 2 is a schematic diagram showing a high level passive loudspeaker connected to a computer for playing high quality audio signal;
FIG 3 is a functional block diagram of the power supply with audio amplification in accordance with the first embodiment of the present invention;
FIG 4A illustrates a front view and of the power supply with audio amplification in accordance with the first embodiment of the present invention;
FIG. 4B illustrates a back view of the power supply with audio amplification in accordance with the first embodiment of the present invention;
FIG. 5 shows the power supply with audio amplification in accordance with the first embodiment of the present invention mounted in the casing of a computer;
FIG. 6 is a functional block diagram of a power supply with audio amplification in accordance with the second embodiment of the present invention;
FIG.7 is the front view of the power supply with audio amplification in accordance with the second embodiment of the present invention;
FIG.8 shows the power supply with audio amplification in accordance with the second embodiment of the present invention mounted in the casing of a computer.

### DETAILED DESCRIPTION OF THE PREFERRED EMBODIMENT

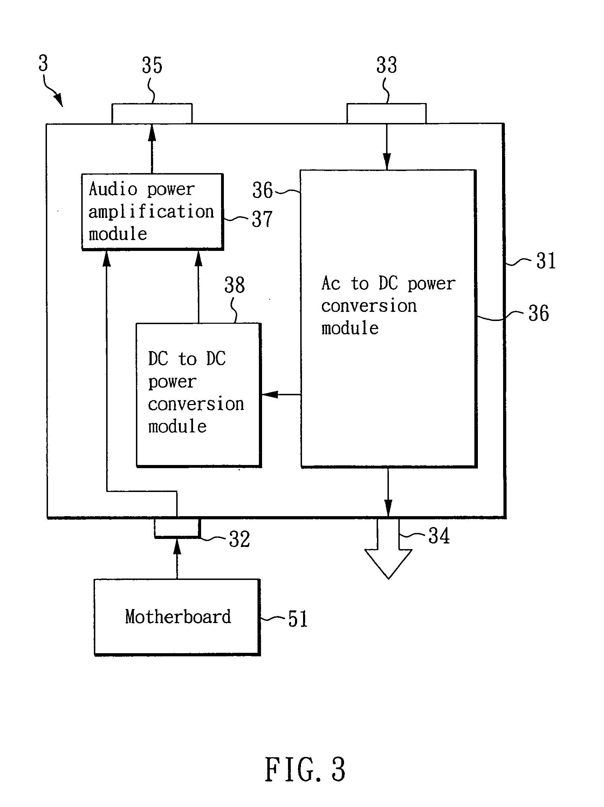

FIG. 3 is a functional block diagram of the power supply with audio amplification in accordance with a preferred embodiment of the present invention. As shown, the power supply 3 includes a housing 31, at least one audio input connector 32, an AC power input connector 33, a DC power output cord 34, at least one audio output connector 35, an AC to DC power conversion module 36, an audio power amplification module 37, and a DC to DC power conversion module 38, wherein the AC to DC power conversion module 36, the audio power amplification module 37, and the DC to DC power conversion module 38 are all mounted in the housing 31. The functions and connection relation of those elements in the power supply 3 will be described hereinafter.

The audio input connector 32 is arranged on a first surface of the housing 31 and electrically connected to the motherboard 51 of a computer. The audio output connector 35 is arranged on a second surface of the housing 31. The AC to DC power conversion module 36 is arranged in the housing 31 for converting an AC power into a DC power for output. The audio power amplification module 37 is arranged in the housing 31, and electrically connected the audio input connector 32 and the audio output connector 35, respectively, for processing audio signal provided by the computer. The DC to DC power conversion module 38 is arranged in the housing 31, and electrically connected the AC to DC power conversion module 36 and the audio power amplification module 37, respectively, for converting the DC power provided by the AC to DC power conversion module 36 and supplying DC power to the audio power amplification module 37 for operation. The functions and the operations of the elements are further described in the following.

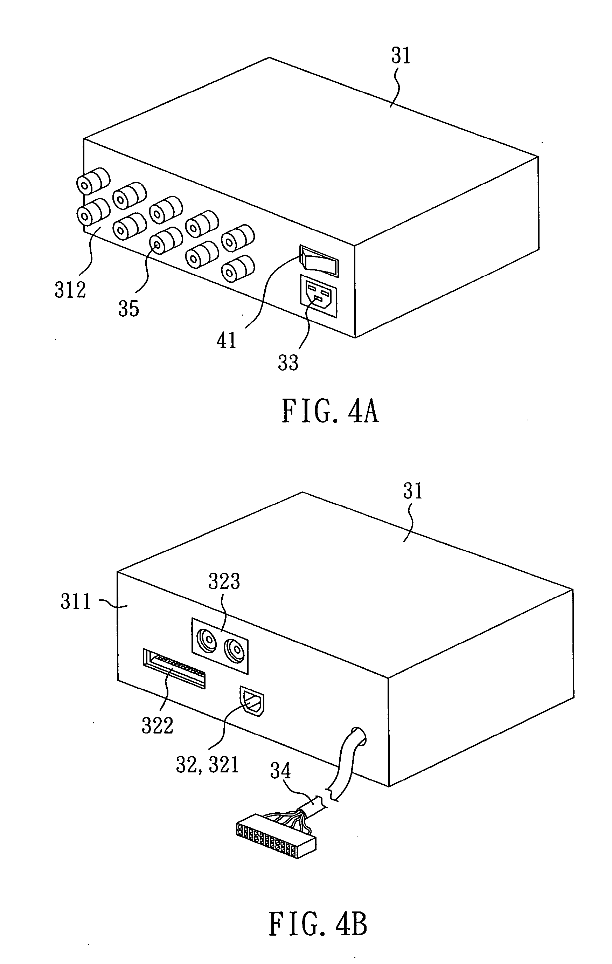

FIG. 4A and FIG. 4B illustrate a front view and a back view of the power supply with audio amplification, respectively. In this embodiment, the power supply 3 with audio amplification has the same size and specification with the typical computer power supply. Therefore, the power supply 3 with audio amplification in accordance with the present invention can easily replace the current computer power supply for being arranged in the casing of a typical computer thereby supplying power to various electronic elements in the computer.

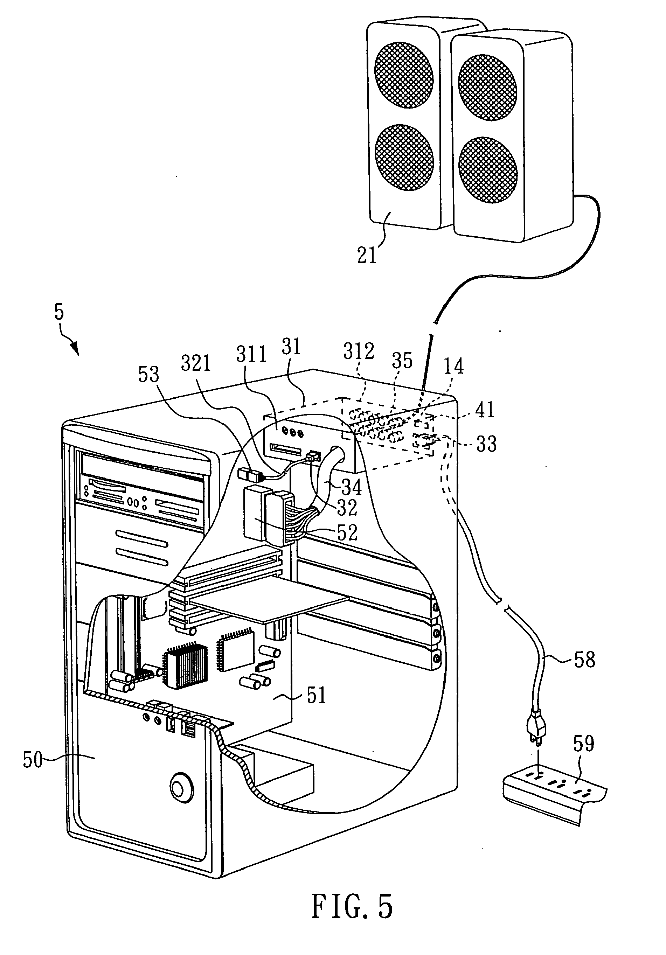

Please also refer to FIG.5, which shows the power supply 3 mounted in the casing 50 of the computer 5. In this embodiment, the first surface 311 of the housing 31 of the power supply 5 faces to the inside of the computer 5, and the second surface 312 thereof is opposite to the first surface 311 and thus faces to the outside of the computer 5. Alternatively, in other embodiments, the second surface 312 may be not opposite to the first surface 311. For example, the second surface 312 is at one of two sides of the housing 31, or the first surface 311 is at the bottom of the housing 31. In FIG. 5, the at least one audio input connector 32 and the DC power output cord 34 are arranged on the first surface 311 of the housing 31. Because the first surface 311 faces to the inside of the computer 5, the DC power output cord 34 can be plugged into a power socket 52 on the motherboard 51 of the computer 5, and the audio input connector 32 can be connected to a corresponding audio output connector 53 on the motherboard 51 or sound card of the computer 5.

The second surface 312 of the housing 31 is arranged with the AC power input connector 33, the at least one audio output connector 35, and a power switch 41. Because the second surface 312 faces to the outside of the computer 5, the AC power input connector 33 can be connected a power socket 59 via a power cord 58 to receive the utility power. The audio output connector 35 can be connected to a passive loudspeaker 21 which is at outside of the computer 5, and the user can manipulate the power switch 41 to turn on or turn off the power supply 3.

With the aforementioned power supply 3 with audio amplification mounted in the computer 5, the AC power input connector 33 receives the utility power via the power cord 58, and the DC power output cord 34 can be plugged into the power socket 52 of the motherboard 51 in the computer 5. The AC to DC power conversion module 36 is employed to convert AC power inputted by the AC power input connector 33 into DC power for supplying power to various electronic elements of the computer 5 via the DC power output cord 34. In addition, in the power supply 3 of this embodiment, the DC to DC power conversion module 38 is also electrically connected to the AC to DC power conversion module 36 for converting DC power provided by the AC to DC power conversion module 36 to supply power to the audio power amplification module 37 for operation.

The audio input connector 32 is connected to the audio output connector 53 on the motherboard 51 of the computer 5 via an audio wire 321, wherein the audio output connector 53 can be arranged on the motherboard 51 or sound card of the computer 5. Therefore, when the computer 5 executes an application program to play sound effect, the sound card or the sound chip arranged on the motherboard 51 will generate corresponding audio signals, which are transmitted to the audio input connector 32 via the audio output connector 53 and the audio wire 321. In this embodiment, the audio input connector 32 can be an S/PDIF (Sony/Philips digital interface) 321, a digital audio input 322, an inter-IC sound (I2S), or an audio analog line-in 323.

The audio power amplification module 37 is electrically connected to the audio input connector 32 and the audio output connector 35, respectively, for amplifying the audio signal received by the audio input connector 32 and outputting the amplified audio signal via the audio output connector 35. In this embodiment, the audio output connector 35 is an analog output for speaker.

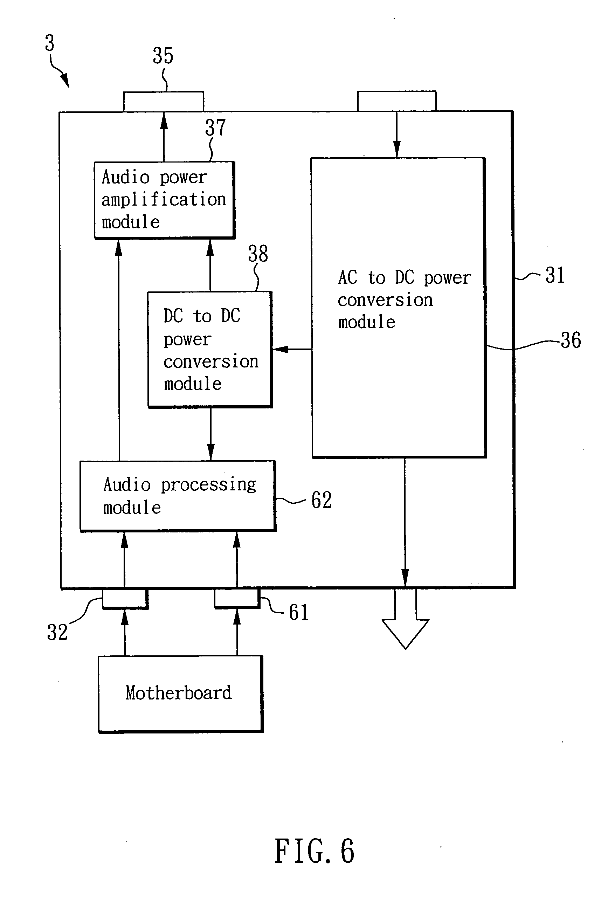

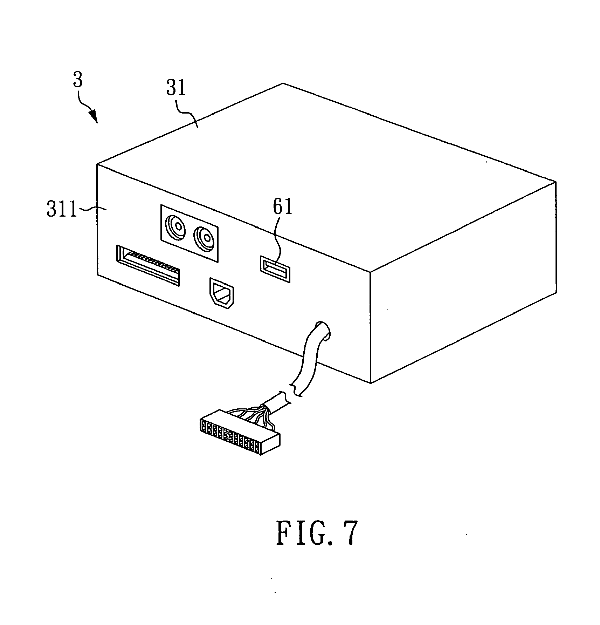

The power amplification module 37 can be an A-class, a B-class, a C-class, an AB-class, a D-class, or a T-class amplifier. Since the power amplification module 37 is operated by the power converted from the utility power, it is possible to provide more than one watt of audio output for one to multiple channels, which is high enough to drive the passive loudspeaker 21 connected with the audio output connector 35. Further, the audio power amplification module 37 is arranged in the housing 10 which is typically made of metal, and thus high-power electromagnetic interference generated by the audio power amplification module 37 can be effectively blocked so as not to influence the operation of the electronic elements in the computer 5. FIG. 6 is a functional block diagram of the power supply 3 with audio amplification in accordance with another preferred embodiment of the present invention, which is different from the previous embodiment in that the power supply 3 further has a control connector 61 and an audio processing module 62 arranged in the housing 31. The other elements of this embodiment are the same as those of the previous one, and thus a detailed description is deemed unnecessary. FIG.7 is the front view of the power supply 3 with audio amplification in accordance with this embodiment, wherein the control connector 61 is arranged on the first surface 311 of the housing 31.

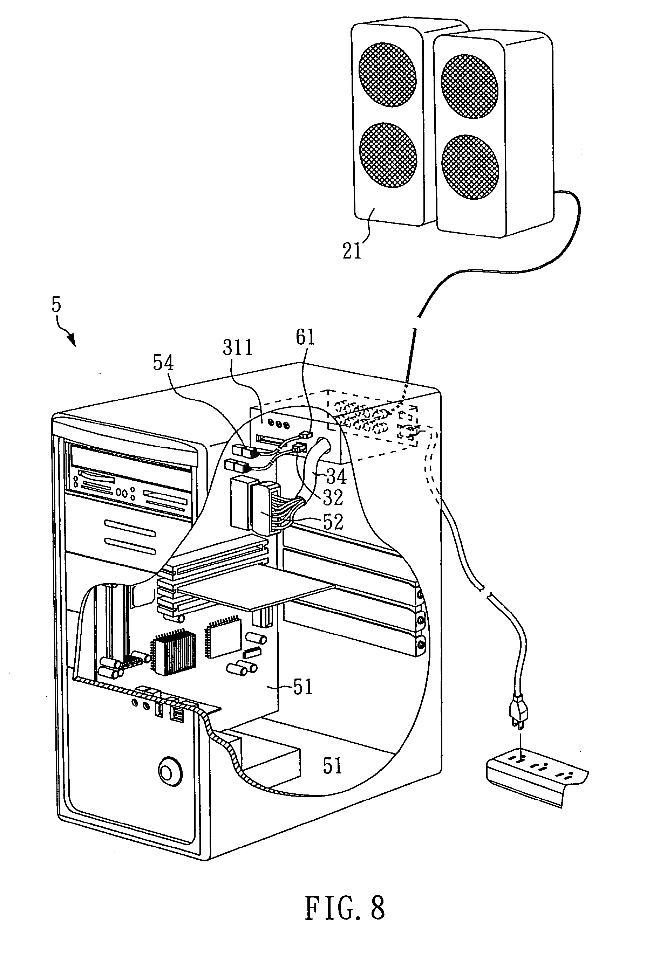

Please also refer to FIG. 8 which shows the power supply mounted in the casing of the computer 5. Because the first surface 311 faces to the inside of the computer 5, the control connector 61 can be connected to a corresponding control port 54 on the motherboard 51 or display card of the computer 5, so that, when the computer 5 executes an application program to play sound effect, audio control can be generated by operating the application program and inputted to the audio processing module 62 via the control connector 61. In this embodiment, the control connector 61 is an I2C or a GPIO connector.

The audio processing module 62 is powered by the DC to DC power conversion module 36 for processing the audio signal received by the audio input connector 32 based on the audio control received by the control connector 61, and outputting the processed audio signal to the audio power amplification module 37 for being amplified and outputted via the audio output connector 35. The audio processing module 62 is preferably a Digital Signal Processing (DSP) module, which processes the received audio signal based on the audio control, so as to perform an adjustment on the output audio signal, for example, volume adjustment, equalization adjustment and sound source selection.

In view of the foregoing, it is known that the power supply with audio amplification in accordance with the present invention is characterized in integrating the audio power amplification module and the audio processing module into the power supply thereby providing the computer with the functions of audio amplifier and audio adjustment, and this power supply with audio amplification can easily substitute the conventional amplifier. Therefore, when being installed with this power supply, the computer can be provide with the functions of integrated audio enhancement and audio amplifier. Further, this power supply is fully compatible with the existent computer architecture.

Although the present invention has been explained in relation to its preferred embodiment, it is to be understood that many other possible modifications and variations can be made without departing from the spirit and scope of the invention as hereinafter claimed.

## Claims

1. A power supply comprising:
a housing having a first surface and a second surface;
at least one audio input connector arranged on the first surface of the housing for electrically connecting to a computer;
at least one audio output connector arranged on the second surface of the housing;
an AC to DC power conversion module arranged in the housing for converting an AC power to provide a DC power;
an audio power amplification module arranged in the housing and electrically connected to the audio input connector and the audio output connector, respectively, for processing audio signal provided by the computer; and
a DC to DC power conversion module arranged in the housing and electrically connected to the AC to DC power conversion module and the audio power amplification module, respectively, for converting the DC power provided by the AC to DC power conversion module, so as to supply power to the audio power amplification module to operate.

2. The power supply as claimed in claim 1, further comprising an AC power input connector arranged on the second surface of the housing for inputting the AC power to the AC to DC power conversion module.

3. The power supply as claimed in claim 1, further comprising a DC power output cord arranged on the first surface of the housing for supplying the DC power to the computer.

4. The power supply as claimed in claim 1, wherein the at least one audio input connector is electrically connected to a motherboard of the computer for receiving audio signal generated by the computer.

5. The power supply as claimed in claim 1, wherein the at least one audio output connector is an analog output for speaker.

6. The power supply as claimed in claim 1, further comprising:
a control connector arranged on the first surface of the housing for receiving audio control generated by the computer; and
an audio processing module arranged in the housing for processing the audio signal received by the audio input connector based on the audio control received by the control connector, and outputting the audio signal processed to the audio power amplification module for being amplified and outputted via the at least one audio output connector.

7. A computer comprising:
a casing;
a motherboard arranged in the casing; and
a power supply arranged in the casing, the power supply including a housing having a first surface facing to inside of the computer and a second surface facing to outside of the computer,
wherein the first surface is arranged with at least one audio input connector for receiving audio signal generated by the motherboard, and the second surface is arranged with at least one audio output connector for outputting the audio signal amplified.

8. The computer as claimed in claim 7, wherein the power supply further comprises:
an AC to DC power conversion module arranged in the housing for converting an AC power to a DC power and supplying the DC power to the computer to operate;
an audio power amplification module arranged in the housing for amplifying the audio signal received by the at least one audio input connector and outputting the audio signal amplified; and
a DC to DC power conversion module arranged in the housing and connected to the AC to DC power conversion module for converting the DC power provided by the AC to DC power conversion module, so as to supply power to the audio power amplification module to operate.

9. The computer as claimed in claim 8, wherein the power supply further comprises:
a DC power output cord arranged on the first surface of the housing for supplying the DC power to the computer.
